Europäisches Patentamt

European Patent Office

Office européen des brevets

(11) Veröffentlichungsnummer: **0 155 691**

**A2**

(12) # EUROPÄISCHE PATENTANMELDUNG

(21) Anmeldenummer: 85103332.4

(22) Anmeldetag: 21.03.85

(51) Int. Cl.⁴: **H 04 M 11/02**

(30) Priorität: 21.03.84 DE 3410354

(43) Veröffentlichungstag der Anmeldung:
25.09.85 Patentblatt 85/39

(84) Benannte Vertragsstaaten:
AT BE CH DE FR GB IT LI NL SE

(71) Anmelder: Siemens Aktiengesellschaft
Berlin und München Wittelsbacherplatz 2
D-8000 München 2(DE)

(72) Erfinder: Muyssen, John
Draaitop Straat 61
B-9050 Evergem(BE)

(54) Anordnung zur Personensuche in Fernmeldeanlagen, insbesondere Fernsprechnebenstellenanlagen.

(57) Die Personensuche ist durch Wahl einer Kennziffer an einer Teilnehmerstelle T1, T2....TxO einleitbar. Die die Personensuche einleitende Teilnehmerstelle T1, T2...TxO belegt über die zentrale Steuerung ST, ST' eine als Pseudo-Teilnehmerstelle über den Kopplern KS am Koppelnetz geschaltete Personensuchsteuerung PSE. Über die Personensuchsteuerung PSE ist ein freier, für die Belegung von Amtsleitungen AL12 vorgesehene Amtssatz AU12 belegbar, über dessen Amtsschleife anstelle der Amtsleitung ein parallel geschalteter, freier Suchsender ansteuerbar ist.

EP 0 155 691 A2

./...

FIG 2

0155691

SIEMENS AKTIENGESELLSCHAFT

Berlin und München

Unser Zeichen

VPA 84 P 1227 E

Anordnung zur Personensuche in Fernmeldeanlagen, insbesondere Fernsprechnebenstellenanlagen.

Die Erfindung bezieht sich auf eine Anordnung zur Personensuche in Fernmeldeanlagen, insbesondere Fernsprechnebenstellenanlagen, mit einem Koppelnetz, einer zentralen Steuerung und mit Datenübertragungsleitungen, über die Informationen zwischen den verschiedenen peripheren Einrichtungen und der zentralen Steuereinrichtung austauschbar sind u'd wobei eine Personensuche durch Wahl an einer Teilnehmerstelle einleitbar ist und für eine gleichzeitige Suche unterschiedlicher Gesuchter durch mehrere Teilnehmer entsprechend mehrere Sender ansteuerbar sind.

Es sind bereits Anordnungen zur Personensuche in Fernmeldeanlagen, insbesondere Fernsprechsprechnebenstellenanlagen bekannt. Die zentrale Steuerung bekannter Anordnungen weist sowohl Mittel zur Steuerung bestimmter Verbindungssätze als auch zusätzliche Mittel zur Steuerung der Personensuche auf.

Die Aufgabe der vorliegenden Erfindung besteht darin, eine Anordnung zur Personensuche in Fernmeldeanlagen, insbesondere Fernsprechnebenstellenanlagen anzugeben, die keine besonderen Mittel für die Steuerung der Personensuche aufzuweisen hat.

Die Lösung dieser Aufgabe erfolgt erfindungsgemäß dadurch, daß die eine Personensuche mittels Kennziffernwahl einleitende Teilnehmerstelle T1, T2...TxO über eine zentrale Steuerung ST, ST' eine als Pseudo-Teil-Dl 1 Bo/ 15.3.1984

nehmerstelle über einen Koppler KS am Koppelnetz geschaltete Personensuchsteuerung PSE belegt, über die ein
freier, für die Belegung von Amtsleitungen AL12 vorgesehener Amtssatz AU12 belegbar ist, über dessen Amtsschleife anstelle der Amtsleitung ein parallel geschalteter, freier Suchsender ansteuerbar ist.

Die Erfindung wird nun anhand er Zeichnungen in einem
zum Verständnis erforderlichen Umfang näher erläutert.
Dabei zeigt

Fig. 1 eine digitale Fernsprechnebenstellenanlage, in
der die erfindungsgemäße Anordnung anwendbar ist;

Fig. 2 eine analoge Anlage, in der ebenfalls die erfindungsgemäße Anordnung anwendbar ist.

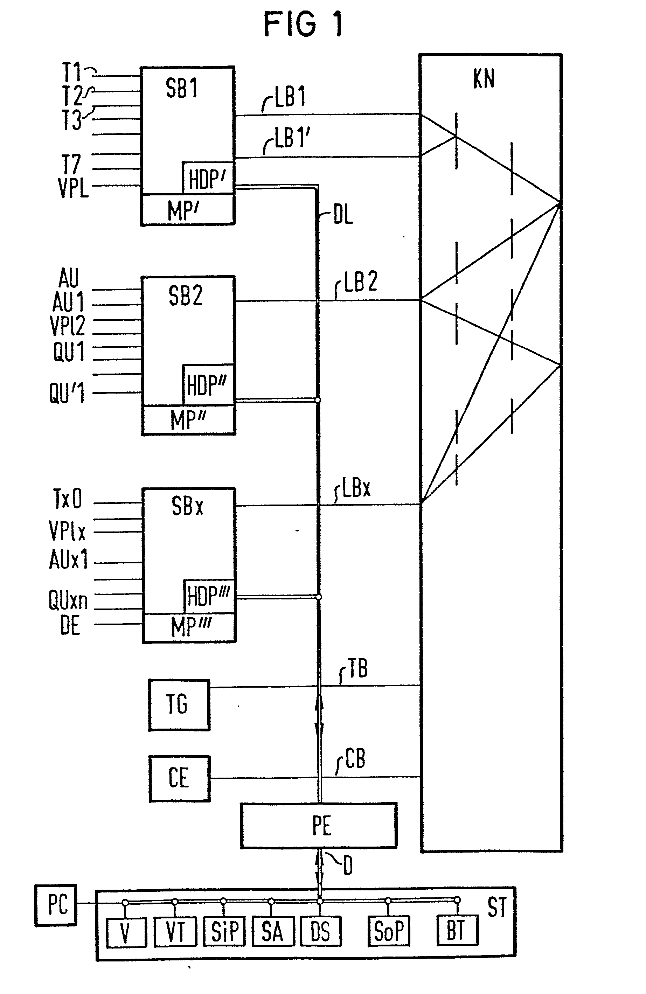

In der FIG. 1 ist eine digitale Fernsprechnebenstellenanlage mit als Beispiel drei Schnittstellenbaugruppen SB1 bis SBx gezeigt, an denen entweder beispielsweise sieben Teilnehmerstellen und ein Vermittlungsplatz VPL bzw. Amtsübertragungen AU, AU1, ein Vermittlungsplatz VP12 und Querverbindungsleitungen QU1 bis QU'1 bzw. Teilnehmerstellen TxO, ein Vermittlungsplatz VP1x, Amtsübertragungen AUx1 und Querverbindungsleitungsübertragungen QUxn, sowie auch Datenendgeräte DE anschaltbar sind. Jede der Schnittstellen ist über ein entsprechendes Leitungsbündel LB1 bzw. LB2 bzw. LBx mit dem Sprechwegekoppelnetzwerk KN und über das gemeinsame Datenübertragungsleitungsbündel DL mit der zentralen Steuereinrichtung ST verbunden. Letztere Verbindung verläuft über die periphere Einrichtung PE, in der gegebenenfalls Informationen, die nicht gleichzeitig in der Steuereinrichtung ST verarbeitbar sind, zwischengespeichert und auch gegebenenfalls umgesetzt werden. Über jedes der Leitungsbündel sind sowohl der Sprachübertragung entsprechenden Informationen als auch andere Daten im Pulscodemodulationsverfahren übertragbar. Der Informationsaustausch zwischen angeschalteten Endstellen, beispielsweise Teilnehmerstellen und Vermittlungsplätzen, sowie auch angeschalteten Amtsleitungen, Querverbindungsleitungen und sonstigen Leitungen erfolgt über das Sprechwegekoppelnetzwerk KN. Hierbei ist zu erwähnen, daß über die Sprechwege nicht nur die Sprachinformationen, sondern auch sonstige Informationen und Daten im Pulscodemodulationsverfahren übertragbar sind. Über das Sprechwegekoppelnetzwerk sind auch zusätzliche, nur andeutungsweise dargestellte Einrichtungen wie Tongeneratoren TG, Codeempfänger CE und andere nicht dargestellte Einrichtungen, beispielsweise Dateneinrichtungen und Prüfschnittstellen anschaltbar.

Der Verbindungsaufbau läuft im Prinzip in der nachfolgend beschriebenen Weise ab. In einer Schnittstellenbaugruppe,

z.B. SB1, wird erkannt, wenn ein Teilnehmer den Hörer abhebt. Dieser Teilnehmer wird über das Sprechwegekoppelnetzwerk mit einem Tongenerator TG und mit einem Codeempfänger CE verbunden. Mit den gewählten Ziffern wird der Verbindungswunsch über die peripheren Einrichtung PE der zentralen Steuereinrichtung ST mitgeteilt. Die Vollständigkeit einer Kennzahl und die entsprechende Berechtigung der anrufenden Teilnehmerstelle bzw. der ankommend belegten Verbindungsleitungsübertragung wird geprüft. Von der zentralen Steuereinrichtung wird, wie bei der Verbindungsherstellung zum Tongenerator TG und zum Codeempfänger CE auch der weitere Verbindungsaufbau zur anzurufenden Stelle gesteuert. Falls erforderlich werden Informationen der betreffenden Schnittstellenbaugruppe, z.B. SB1, in Abhängigkeit von Befehlen der zentralen Steuereinrichtung ST zu einer anderen Schnittstellenbaugruppe, z.B. SBx, über das Datenübertragungsleitungsbündel DL übertragen. Gegebenenfalls werden auch über das Sprechwegekoppelnetzwerk Daten von der einen Schnittstellenbaugruppe zur anderen Schnittstellenbaugruppe bzw. über die Verbindungsleitungsübertragungen weitergegeben. Hierdurch ist auch ohne zusätzliche Verbindungsleitungen ein Datenaustausch zu anderen Anlagen möglich. Bei der gezeigten Darstellung ist davon ausgegangen, daß den Teilnehmerendstellen bereits Umsetzeinrichtungen für die Umsetzung analoger Informationen in digitale Informationen und umgekehrt (sogenannte Codec) zugeordnet sind. Die weitere Funktionsanpassung erfolgt in den dargestellten Schnittstellenbaugruppen. Für die Umsetzung von analogen Signalen analoger Endstellen bzw. analoger Verbindungsleitungsübertragungen können der Schnittstellenschaltung der Schnittstellenbaugruppe auch entsprechende Umsetzschaltmittel (CODEC) zugeordnet werden.

Für die Übertragung der Sprachinformationen und der son-

stigen Dateninformationen über das Sprechwegekoppelnetzwerk KN wird das Übertragungssystem PCM 30 verwendet.
Bei diesem Übertragungssystem müssen in jeder Richtung
innerhalb von 125 µs hintereinander 30 Codewörter mit
je 8-Bit übertragen werden. Zu diesen 30 Codewörtern
gehören zwei weitere 8-Bit-Informationen und zwar eine
für die Signalisierung und eine Information, die abwechselnd ein Rahmenkennungswort und ein Meldewort enthält. Die 30 Codewörter bilden zusammen mit den genannten, weiteren 2 x 8 Bit einen Pulsrahmen. Die Pulsrahmen
werden unmittelbar aneinandergereiht übertragen. Die Rahmenkennungswörter der Pulsrahmen synchronisieren Sende-
und Empfangsteile des PCM 30-Übertragungssystems.

Über das zu der zentralen Steuereinrichtung ST führende
Datenübertragungsleitungsbündel DL werden Informationen
in einem Nachrichtenformat mit variabler Datenlänge übertragen und zwar nach einem Hochpegel-Zeichengabeverfahren HDLC. Das Informationsformat ist dabei in der Länge
von 5 bis 32 Bytes variabel und enthält in der Regel
Adresse, Folgenummer, Prüfzeichen und die eigentliche
Nachricht.

In der zentralen Steuereinrichtung ST sind für die Verarbeitung der empfangenen Informationen und für die Zurückübertragung entsprechender Befehle mehrere, unterschiedliche Speicher und Verarbeitungseinrichtungen, wie Vergleicher und andere Schaltmittel vorhanden. Die einzelnen
zu der zentralen Steuereinrichtung ST gehörenden Speicher
und Einrichtungen sind nachfolgend in Zusammenhang mit
der Erläuterung des erfindungsgemäßen Verfahren näher beschrieben.

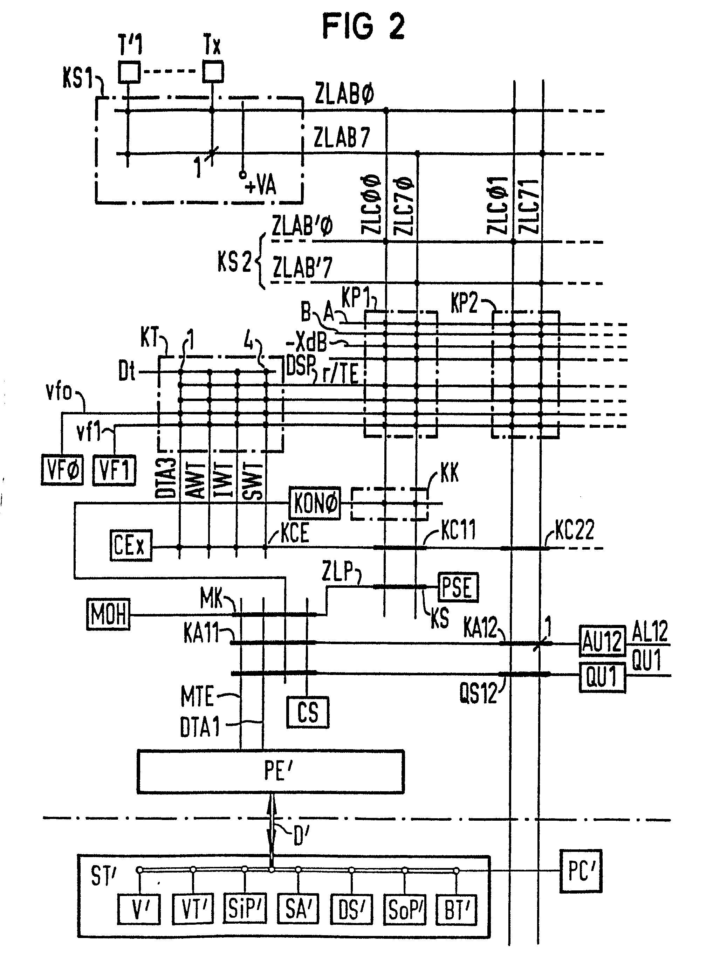

In der FIG. 2 ist eine Fernsprechnebenstellenanlage gezeigt die mit analogen Signalen betreibbar sein soll.

Bei dieser analogen Fernsprechnebenstellenanlage handelt es sich um eine zentralgesteuerte Anlage, bei der der zentralen Steuereinrichtung ST' eine nicht dargestellte Wegesucheinrichtung und Schaltmittel zur Durchsteuerung der durchzuschaltenden Koppelpunkte zugeordnet sind, die in bekannter Weise arbeiten. Die im System vorhandenen Koppler schalten die Sprechwege einadrig durch. Die Koppelpunkte selbst sind sogenannte elektronische Koppelpunkte, zum Beispiel CMOS-Bausteine. Bei der in FIG. 2 dargestellten Anlage sind als Endstellen Teilnehmerstellen T1 bis Tx an einer ersten Koppelstufe KS1 und sind weitere nicht dargestellte Teilnehmerstellen und sonstigen Endstellen an weiteren nicht dargestellten Koppelstufen anschaltbar. Für die Koppelstufe KS1 sind die Zwischenleitungen ZLAB0 bis ZLAB7 und für eine weitere nicht dargestellte Koppelstufe KS2 die Zwischenleitungen ZLAB'0 bis ZLAB'7 gezeigt. Die vorgenannten Zwischenleitungen führen zu parallelgeschalteten Kopplern von denen als Beispiel nur zwei, KP1 und KP2, dargestellt sind.

Die Durchschaltung der Koppelpunkte erfolgt, wie bereits erwähnt unter Zuhilfenahme der zentralen Steuereinrichtung ST'und der der zentralen Steuereinrichtung ST' zugeordneten Wegesucheinrichtung. Sprechstellen unterschiedlicher Gruppen werden durch Betätigen jeweils eines Koppelpunktes eines Kopplers, z.B. KS1,der einen Gruppe und eines Koppelpunktes des Kopplers der anderen Gruppe, z.B. KS2 für eine Sprechverbindung, über welche auch sonstige Daten übertragen werden können, miteinander verbunden. Eine Verbindung der Teilnehmerstelle Tx mit einer Amtsübertragung, z.B. AU12, für die Herstellung einer Verbindung über die Amtsleitung AL12 erfolgt beispielsweise durch Betätigen des Koppelpunktes KS1/1 des Kopplers KS1 und des Koppelpunktes KA12/1 des Kopplers KA12. Die Verbindung verläuft dann über die Zwischenleitun-

gen ZLAB7 und ZLC71. Für die Herstellung von Internverbindungen können beliebige Koppelpunkte in der Zeile bzw. in der Spalte für die Verbindung entsprechender Ein- und Ausgänge zur anrufenden bzw. zur angerufenen Stelle betätigt werden. Beim Amtskoppler ist dagegen jedem Ausgang fest eine Amtsübertragung zugeordnet, die über einen der Eingänge d.h. über eine der Zwischen-leitungen für abgehende Verbindungen und umgekehrt für ankommende Verbindungen belegbar ist.

Für eine Verbindungsherstellung innerhalb der Fernsprechnebenstellenanlage und auch für die Weiterübertragung von Wahlkennzeichen zum öffentlichen Amt ist die Anschaltung eins Codeempfängers, z.B. CEx, an der zu anrufenden Teilnehmerstelle führenden Leitung erforderlich. Auch ist die Anschaltung von Wahlkennzeichen zur anrufenden bzw. angerufenen Teilnehmerstelle notwendig. Zu diesem Zwecke sind entsprechende Koppler KC11 und KT in den Zwischenleitungen, die zu den Endstellen (Teilnehmerstellen, Vermittlungsstelle) und Verbindungsleitungsübertragungen, Amtsübertragungen führen, eingefügt. Der Codeempfänger CEx wird beispielsweise über den Koppler KC11 mit einer der Endstellen und über den Koppler KC22 mit einer der Amtsübertragungen oder Querverbindungsleitungsübertragungen verbunden. Die Anschaltung des Codeempfängers erfolgt beispielsweise nach Abheben des Hörers an einer Teilnehmerstelle in Abhängigkeit entsprechender Steuerbefehle der zentralen Steuereinrichtung ST'. Wählt eine Teilnehmerstelle eine Amtskennziffer, so erfolgt die Durchschaltung der anrufenden Teilnehmerstelle, z.B. Tx, durch Betätigen eines entsprechenden Koppelpunktes KS1/1 des der Teilnehmerstelle zugeordneten Kopplers KS1 zur Amtsübertragung, beispielsweise über den Koppelpunkt KA12/1 des Amtskopplers KA12. Für die Aufnahme der über die Amtsübertragung zu empfangenen Wahlkennzeichen

ger wird beispielsweise anstelle über den Koppler KC11 jetzt über den Koppler KC22 dieser Codeempfänger CEx an die entsprechende durch die Amtsübertragung belegte Zwischenleitung ZLC71 angeschaltet. Im Koppler KA12 ist für die Durchschaltung nur ein Koppelpunkt je Zeile gleichzeitig durchschaltbar.

Die Anschaltung der Hörsignale, d.h. der Hörtöne, erfolgt teilweise über einen der Koppler KP1 bis KP2 und teilweise über den Koppler KCE, der in den Zwischenleitungen eingefügt ist, über die die Codeempfänger angeschaltet werden. Über den Koppler KCE werden die Töne angeschaltet, die in Zusammenhang stehen mit der Wahl, also während der Anschaltezeit der Codeempfänger. So wird beispielsweise über die Leitung SWT ein Sonderwählton, über die Leitung IWT der interne Wählton, über die Leitung AWT der Amtswählton und über die Leitung DTA3 ein Dauerton angeschaltet. Der Rhythmus der Töne wird durch Öffnen und Schliessen der Koppelpunkte KT1 bis 4 des Kopplers KT bestimmt. Über die Koppelpunkte KT1 bis 4 des Kopplers KT, denen ein Dauerton für die erstgenannten drei Wähltonarten zugeführt wird steuert die zentrale Steuereinrichtung ST' den Takt. Der Koppler KCE für die Anschaltung der Wähltöne vereinfacht das Anschalteverfahren und reduziert die Anzahl notwendiger Koppelpunkte in den Kopplern KP1, KP2. Über die Koppler KP1, KP2 werden andere Töne, beispielsweise der Besetztton über die Ader B der Aufschalteton über die Ader A angeschaltet. Über die Zwischenleitung DSP werden Potentiale für die Durchschalteprüfung der Koppelpunkte angeschaltet. Über den Anschluß HTE ist ein Hörzeichen anschaltbar um eine Prüfung der angeschalteten Endstelle bzw. der angeschalteten Übertragung beispielsweise durch Spiegelung der Signale vorzunehmen. Über die Zwischenleitungen vf0 und vf1 sind Vermittlungsplätze VF0 und VF1 an den Verbindungswegen zu den Endstellen und Leitungs- übertragungen anschaltbar. Diesen Vermittlungsplätzen können über den Koppler KT unmittelbar Wähltöne zugeleitet
werden.

Der Codesender CS überträgt über die entsprechenden Koppler KA12, QS12 Mehrfrequenzcodezeichen als Wahlkennzeichen zu angeschalteten Verbindungsleitungen, d.h. Amtsleitungen bzw. Querverbindungsleitungen und zwar erfolgt
diese Übertragung in Abhängigkeit des über die jeweilige
Verbindungsleitung übertragenen Wahlbereitschaftskennzeichens, d.h. des übertragenen Wählzeichens aus der
Gegenanlage. Die Überwachung des Empfangs eines derartigen Hörzeichens als Wahlbereitschaftskennzeichen erfolgt
über die Ader HTE durch die zentrale Steuerung.

Über einen weiteren Koppler KS ist eine Personensucheinrichtung mit den Endstellen über die entsprechenden
Koppelpunkte anschaltbar. Ferner ist eine zusätzliche
Einrichtung MOH für die Anschaltung besonderer Hörzeichen,
beispielsweise auch von Musik während eins Wartzustandes
vorgesehen. Eine Herstellung von Konferenzverbindungen
ist über den Koppler KK und über entsprechende Konferenzsätze KONØ möglich.

Aus dem vorstehenden geht hervor, daß in den Zwischenleitungen die Spalten der zusätzlichen Koppler geschaltet
sind. Die Zeilen dieser Koppler sind entweder direkt mit
den genannten zusätzlichen Einrichtungen bzw. über weitere
zusätzliche Koppler direkt mit anderen Einrichtungen, beispielsweise Vermittlungsplätze und Codeempfänger verbunden, wobei aber über die zusätzlichen Koppler zusätzliche
Informationen, beispielsweise in Rhythmus anschaltbare
Töne bzw. andere Informationen, auch Musik während des
Wartezustandes, anschaltbar sind.

Die der zentralen Steuereinrichtung ST' zugeordneten Spei-

cher und Zusatzeinrichtungen werden nachfolgend bei der Beschreibung des erfindungsgemäßen Verfahrens näher erläutert.

Die Steuereinrichtungen ST nach FIG. 1, ST' nach FIG. 2 enthalten, wie vorstehend bereits erwähnt, mehrere unterschiedliche Speicher, die als veränderbare und nicht veränderbare Speicher für die Abwicklung von vermittlungstechnischen Verbindungen und auch für die Abwicklung von anderen Vorgängen als vermittlungstechnische Vorgänge dienen. In den veränderbaren Speichern werden die jeweiligen Zustandsinformationen für die Verarbeitung in der zentralen Steuereinrichtung ST bzw. ST' in bekannter Weise zwischengespeichert. In den nicht veränderbaren Speichern sind die Informationen gespeichert, die jeweils den Verfahrensablauf in der Anlage bestimmen. Sie sind spezifisch für die jeweilige Anlage. Mit DS bzw. DS' ist jeweils der Datenspeicher bezeichnet, in den die veränderbaren Kundendateninformationen und die veränderbaren Informationen, die die Dienste und Sonderfunktionen der Fernsprechnebenstellenanlage bestimmen gespeichert. In diesen veränderbaren Datenspeichern können auch die als Ergebnis sich ergebenden Informationen einer sicherheitstechnischen Prüfung zwischengespeichert werden. Eine solche Zwischenspeicherung kann erforderlich sein um bei Fehlererkennung eine Auswertung in der Weise vorzunehmen, daß nur bei solchen Prüfvorgängen unterschiedliche Fehlerkennungen eingeleitet werden, die der Fehlerart bzw. den Fehlerarten der unterschiedlichen Fehlerkennungen in einem letzten sicherheitstechnischen Prüfablauf entsprechen. In den erwähnten Datenspeicher DS sind auch solche veränderbare Informationen gespeichert, die die Funktionszuteilung zu einer Teilnehmerstelle kennzeichnen. So kann beispielsweise eine erste Funktionskennung, die in Zuordnung zu einer Kennung einer entsprechenden Teilnehmerstelle in diesem Speicher DS vorhanden ist, die Zuteilung einer Sekretärfunktion festlegen. Einer anderen Teilnehmerstelle kann durch Zuordnung
entsprechender Kennungen die Cheffunktion zugeteilt werden.

Der zentralen Steuereinrichtung ST bzw. ST' sind auch Vergleichsschaltmittel V bzw. V' zugeordnet, welche die eingehenden Informationen mit vorhandenen, bestimmten Vermittlungszuständen bzw. bestimmten Teilnehmerstellen zugeordneten Informationen vergleichen und dementsprechend
die Abgabe von Steuerbefehlen beeinflussen. Zusätzliche
Schaltmittel SA bzw. SA' dienen dazu zusätzliche Funktionsabläufe nachträglich in die Fernsprechnebenstellenanlage einzubringen. Der zentralen Steuereinrichtung ST
bzw. ST' sind auch Schaltmittel VT und BT bzw. VT' und
BT' zugeordnet, die die vermittlungstechnischen bzw. den
betriebstechnischen Vorgänge betreffen. Die vermittlungstechnischen Vorgänge beziehen sich auf die Herstellung
und Auslösung von vermittlungstechnischen Sprechverbindungen und Verbindungen für Datenübertragung, während
sich die betriebstechnischen Vorgänge auf Vorgänge beziehen, die dazu dienen die Fernsprechnebenstellenanlage
vor der Einschaltung bzw. auch nach der Einschaltung in
einer bestimmten Weise hinsichtlich des Verfahrensablaufes
bzw. der Dienste und Zusatzfunktionen einzurichten bzw. zu
verändern. Hierzu gehören beispielsweise die Zuteilung von
Berechtigungen, die Einrichtung von Sonderfunktionen und
Diensten, wie beispielsweise Aufschalten, Sammelanschluß,
Konferenzteilnehmer, Sekretär-/Cheffunktion und auch die
Zuteilung von für bestimmte Funktionsabläufe zu wählenden
Kennzahlen. Ferner sind der Steuereinrichtung ST bzw. ST'
Schaltmittel SiP bzw. SiP' für die Einleitung und Durchführung einer Sicherheitsprüfung zugeordnet. Für die Aufnahme und Auswertung von Steuerbefehlen einer Bedienungsstation bzw. einer Vermittlungsstation sind der Steuer-

einrichtung ST bzw. ST' ebenfalls besondere Schaltmittel BT bzw. BT' zugeordnet.

In Fernmeldeanlagen bzw. Fernsprechnebenstellenanlagen vorgesehene Verbindungssätze   beispielsweise Amtssätze, weisen eine bestimmte schaltungstechnische Realisierung, eine sogenannte Hardware auf, deren Funktionen von der zentralen Steuerung ST bzw. ST' steuerbar sind. Bei Amtssätzen sind dies  Funktionen wie beispielweise abgehende Belegung, Durchschalten von Verbindungen, Rückübertragungen, Melden des gerufenen Teilnehmers. Solche Funktionen werden unter Zuhilfenahme der zentralen Steuerung ST bzw. ST' gesteuert.

In der oben anhand von Fig. 1 bzw. Fig. 2 beschriebene digital bzw. analog arbeitenden Fernsprechnebenstellenanlage erfolgt die Steuerung der Funktionen für abgehende Verbindungen über Amtssätze bzw. Amtsübertragungen AU, AU1 bzw. AU12. Die Amtssatzfunktionen sind auch bei Übertragungen für Personensuche notwendig. Die Steuerung der Personensuche erfolgt erfindungsgemäß durch diejenigen Mittel der zentralen Steuerung ST bzw. ST', die auch Amtsübertragungen steuert.

Die Personensuche ist durch Wahl einer Kennziffer an einer Teilnehmerstelle T1, T2...TxO einleitbar. Die die Personensuche einleitende Teilnehmerstelle T1, T2...TxO belegt über die zentrale Steuerung ST, ST' eine als Pseudo-Teilnehmerstelle über den Koppler KS am Koppelnetz geschaltete Personensuchsteuerung PSE. Über die Personensteuerung PSE ist ein freier, für die Belegung von Amtsleitungen, beispielweise AL12, vorgesehene Amtssatz AU12 belegbar, über dessen Amtsschleife anstelle der Amtsleitung ein parallel geschalteter, freier Suchsender ansteuerbar ist. Der freie, für die Belegung von Amtsleitungen vorgesehene Amtssatz fungiert als Such-

0155691

Übertragung, über die über einen entsprechenden Suchsender die Suchfrequenz bzw. die Suchfrequenzen des
bzw. der Gesuchten übertragen wird. Bei Emfpang eines
Meldesignals des Gesuchten wird dieses in der Suchübertragung aufgenommen und in der Personensuchsteuerung PSE in bekannter Weise verarbeitet.

Die Suchwünsche verschiedener Teilnehmer können über ein
und dieselbe Suchübertragung verschachtelt nach einem
Multiplexverfahren abgesetzt werden. Zu diesem Zweck wird
nacheinander die Suchübertragung für jeden Suchwunsch belegt, die Suchfrequenz gesendet und die Suchübertragung
wieder freigeschaltet. Die Hardwarefunktionen in der
Suchübertragung werden von der zentralen Steuerung ST
bzw. ST' wie Amtssatzfunktionen gesteuert. In der zentralen Steuerung ST bzw. ST' sind daher keine zusätzlichen Funktionen notwendig.

1 Patentanspruch
2 Figuren

Patentanspruch

Anordnung zur Personensuche in Fernmeldeanlagen, insbesondere Fernsprechnebenstellenanlagen, mit einem Koppelnetz, einer zentralen Steuerung und mit Datenübertragungsleitungen, über die Informationen zwischen den verschiedenen peripheren Einrichtungen und der zentralen Steuereinrichtung austauschbar sind und wobei eine Personensuche durch Wahl an einer Teilnehmerstelle einleitbar ist und für eine gleichzeitige Suche unterschiedlicher Gesuchter durch mehrere Teilnehmer entsprechend mehrere Sender ansteuerbar sind, d a d u r c h g e k e n n z e i c h n e t , daß die eine Personensuche mittels Kennziffernwahl einleitende Teilnehmerstelle (T1, T2...TxO) über eine zentrale Steuerung (ST, ST') eine als Pseudo-Teilnehmerstelle über einen Koppler (KS) am Koppelnetz geschaltete Personensuchsteuerung (PSE) belegt, über die ein freier, für die Belegung von Amtsleitungen (AL12) vorgesehener Amtssatz (AU12) belegbar ist, über dessen Amtsschleife anstelle der Amtsleitung ein parallel geschalteter, freier Suchsender ansteuerbar ist.

0155691

# FIG 1

2/2

FIG 2

0155691